# FASCICULE DE BREVET EUROPEEN

(11) **EP 3 454 463 B1**
(45) Date de publication et mention de la délivrance du brevet: **11.11.2020**
(21) Numéro de dépôt: 18193677.4
(22) Date de dépôt: 11.09.2018
(51) Int. Cl.: H02M 1/36, H02M 3/158, H02M 1/00

(54) **CONVERTISSEUR DE TENSION EMBARQUÉ SUR UN VÉHICULE AUTOMOBILE ET DISPOSITIF DE PRÉCHARGE ASSOCIÉ**
SPANNUNGSWANDLER IN EINEM KRAFTFAHRZEUG UND ASSOZIIERTE VORLADENSVORRICHTUNG
VOLTAGE CONVERTER EMBEDDED IN AN AUTOMOBILE VEHICLE AND ASSOCIATED PRECHARGE DEVICE

(30) Priorité: 11.09.2017 FR 1758388
(43) Date de publication de la demande: 13.03.2019
(73) Titulaire: Valeo Systèmes de Contrôle Moteur, 95892 Cergy-Pontoise Cedex (FR)
(72) Inventeur: BAUDESSON, Philippe, 95892 CERGY PONTOISE (FR)
(74) Mandataire: Cardon, Nicolas

(56) Documents cités:
- EP-A2- 3 048 712
- WO-A1-2017/073828
- US-A1- 2012 261 982
- US-A1- 2015 288 169

## Description

La présente invention concerne les dispositifs de précharge dans les véhicules automobiles électriques ou hybrides.

L'invention se rapporte en particulier à un convertisseur de tension embarqué sur un véhicule automobile électrique ou hybride, configuré pour réaliser une fonction supplémentaire de précharge électrique.

De manière connue, les véhicules automobiles sont équipés d'un convertisseur de tension DC/DC configuré pour convertir une première tension d'entrée, par exemple de 48 V, en une deuxième tension de sortie, par exemple en 12 V.

Les convertisseurs, de même que les batteries embarquées sur un véhicule automobile, peuvent comporter une ou plusieurs capacités, dont il est nécessaire d'assurer la précharge avant l'utilisation en conditions optimales du convertisseur embarqué correspondant.

Il existe donc un besoin pour assurer une telle fonction de précharge dans les véhicules automobiles hybrides ou électriques, tout en minimisant le coût et l'encombrement des systèmes électroniques embarqués.

L'invention vise à répondre à ce besoin, et a ainsi pour objet, selon l'un de ses aspects, un convertisseur de tension embarqué sur un véhicule automobile, pour convertir une première tension en une deuxième tension différente de la première, comportant :
- une pluralité de cellules C, comportant chacune un bras de transistors T3, T4 commandé en hacheur pour générer la deuxième tension,
- au moins un transistor d'isolement K4, et
- un circuit de contrôle des transistors,
le circuit de contrôle étant configuré pour sélectivement maintenir ouvert au moins le transistor d'isolement K4 afin de découpler une cellule de la pluralité de cellules et d'utiliser le bras K5, K6 de ladite cellule comme simple conducteur de courant pour fournir un courant de précharge à une ou plusieurs capacités, voire toutes les capacités, du convertisseur et/ou d'un réseau fournissant la première tension.

Dans un mode particulier de réalisation de l'invention, ledit au moins un transistor d'isolement appartient à une des cellules de ladite pluralité de cellules.

Dans un mode de réalisation particulier de l'invention, ledit au moins transistor d'isolement est relié par l'intermédiaire d'une inductance au point milieu du bras de transistors de la cellule comprenant ledit au moins un transistor d'isolement. Ainsi, la cellule comprenant ledit au moins transistor d'isolement comprend également une inductance.

Dans un mode de réalisation particulier de l'invention, les cellules du convertisseur sont disposées en parallèle. En d'autres termes, les cellules du convertisseur sont connectées électriquement en parallèle.

En d'autres termes, le transistor d'isolement K4 est utilisé comme interrupteur électronique pouvant être ouvert (interrupteur bloqué) ou fermé (interrupteur passant).

Lorsque l'interrupteur d'isolement K4 est fermé, les transistors des cellules sont commandés de la même façon que dans un convertisseur de tension DC/DC selon l'art antérieur et contrôlés avec le même cycle de fonctionnement. L'un des transistors d'un bras d'une cellule est ouvert, pendant que l'autre est passant, puis inversement. On a un déphasage de T/4 entre les commandes d'ouverture ou de fermeture des transistors des différentes cellules et T la période du cycle de fonctionnement. En d'autres termes, le rapport cyclique au sein de chacune des cellules est identique mais les commandes des transistors sont déphasées de T/4 d'une cellule à l'autre.

Lorsque l'interrupteur d'isolement K4 est ouvert, le convertisseur selon l'invention permet de réaliser une fonction de précharge. Dans ce cas, le circuit de contrôle des transistors ouvre les transistors de toutes les cellules à l'exception des transistors K5, K6 des transistors appartenant à la cellule découplée par le transistor d'isolement K4.

Grâce à l'invention, on combine des fonctions électroniques qui étaient de manière connue effectuées par des composants distincts, ce qui permet de réduire l'encombrement total ainsi que les coûts de production.

En outre, le refroidissement et le circuit de contrôle des transistors peuvent être les mêmes, ce qui contribue encore à réduire l'encombrement ainsi que les coûts de production.

Le convertisseur peut comporter en outre une cellule de précharge comportant un bras de transistors K1, K2 commandé en hacheur-abaisseur (« *buck »* en anglais). Lorsque le bras de transistors K1, K2 de la cellule de précharge est commandé en hacheur-abaisseur, on peut ainsi fournir une charge suffisante à une ou plusieurs capacités, voire toutes les capacités, du convertisseur et/ou d'un réseau fournissant la première tension, afin d'assurer leur précharge, laquelle est nécessaire avant l'utilisation en conditions optimales du convertisseur.

Le convertisseur peut comporter en outre un transistor de sécurité de précharge K3 entre ledit bras de transistors K1, K2 commandé en hacheur-abaisseur et la sortie de la deuxième tension. Ce transistor de sécurité de précharge K3 permet d'assurer une protection de la cellule de précharge mentionnée ci-dessus.

Par rapport à un convertisseur équivalent connu, on utilise seulement deux transistors supplémentaires pour réaliser deux fonctions différentes avec un même circuit, ce qui est avantageux en termes de coût et d'encombrement.

Le convertisseur peut comporter une capacité C1 branchée à la sortie des cellules du convertisseur. Dans le cas où le transistor d'isolement K4 est ouvert, la capacité C1 est branchée à la sortie des cellules du convertisseur autres que la cellule correspondant au transistor d'isolement K4. Dans le cas où ce transistor d'isolement K4 est fermé, alors ladite cellule sert au convertisseur pour fournir la deuxième tension, et la capacité C1 est branchée à la sortie de toutes les cellules du convertisseur.

Ladite capacité C1 branchée à la sortie des cellules du convertisseur peut être polarisée ou non polarisée. Il peut notamment s'agir d'un condensateur céramique.

Par ailleurs, si le convertisseur comporte un nombre de cellule plus faible, il faut augmenter la valeur de la capacité. Par exemple, pour un convertisseur à deux cellules, la capacité doit être double de celle nécessaire pour un convertisseur à quatre cellules.

Les cellules du convertisseur sont disposées en parallèle. Le convertisseur peut comporter plusieurs cellules, par exemple 2, 3, 4, 5 ou 6.

En fonction des utilisations, le convertisseur n'a besoin que d'une ou plusieurs cellules de la pluralité de cellules pour fournir la deuxième tension, les autres cellules de la pluralité de cellules étant inutilisées. Il est alors avantageux d'utiliser un des bras d'une cellule inutilisée pour fournir la fonction de précharge, aussi bien lorsque le véhicule est en roulage qu'à l'arrêt.

Dans un exemple de réalisation, on a quatre cellules disposées en parallèle.

Dans un mode particulier de réalisation, le transistor d'isolement K4 est relié par l'intermédiaire d'une inductance au point milieu du bras de transistors de la cellule utilisée pour fournir la fonction de précharge.

Dans un mode particulier de réalisation de l'invention, le convertisseur peut comporter en outre au moins un transistor d'isolement TR associé à une ou des cellules de la pluralité de cellule.

Dans un mode particulier de réalisation de l'invention, le convertisseur peut comporter en outre un transistor de sécurité TS entre ledit au moins un transistor d'isolement TR et la sortie de la deuxième tension. Le convertisseur peut comporter un transistor de sécurité TS par cellule du convertisseur. Le convertisseur peut comporter un ou plusieurs transistors d'isolement, par exemple 1, 2, 3, 4, 5 ou 6. Un nombre élevé de transistors d'isolement peut permettre d'améliorer la puissance de l'ensemble.

Dans l'invention, on comprend qu'on utilise le bras de la cellule découplée par le transistor d'isolement K4 pour réaliser une fonction de précharge.

Par ailleurs, dans un mode particulier de réalisation de l'invention, le circuit de contrôle peut également être configuré pour sélectivement maintenir ouvert au moins le transistor d'isolement K4 afin de découpler la cellule correspondante et d'utiliser le bras de ladite cellule commandé en hacheur pour fournir une troisième tension de sortie.

Dans un mode particulier de réalisation de l'invention, le convertisseur comporte en outre un transistor d'isolement supplémentaire K7 disposé directement en amont de la sortie de la troisième tension.

Dans un mode particulier de réalisation de l'invention, le convertisseur comporte en outre une capacité C3 reliée par une de ses bornes au transistor d'isolement supplémentaire K7.

Dans un mode particulier de réalisation de l'invention, le convertisseur comporte en outre un transistor de sécurité de précharge K3, le circuit de contrôle étant configuré pour permettre, lorsque le transistor de sécurité de précharge K3 est ouvert, de fournir au moins la troisième tensions, et lorsque le transistor de sécurité de précharge K3 est fermé, d'utiliser le bras de ladite cellule commandé en hacheur comme simple conducteur de courant pour fournir un courant de précharge à une ou plusieurs capacités, voire toutes les capacités, du convertisseur et/ou d'un réseau fournissant la première tension.

En cas de précharge, le transistor d'isolement supplémentaire K7 est maintenu ouvert, le transistor de sécurité de précharge K3 est maintenu fermé et le transistor d'isolement K4 est ouvert.

Lorsqu'une troisième tension de sortie est fournie, le transistor d'isolement supplémentaire K7 est maintenu fermé, le transistor de sécurité de précharge K3 est maintenu ouvert et le transistor d'isolement K4 est ouvert.

La troisième tension de sortie peut être égale ou non à la première tension.

La troisième tension peut être utilisée afin de charger une batterie.

Dans un mode de réalisation, la troisième tension est égale à la première tension, étant par exemple toutes deux de 48 V. Le convertisseur est alors utilisé en chargeur.

Dans une variante de réalisation, la troisième tension est différente de la première tension. Le convertisseur est alors un convertisseur à double sortie dont la deuxième sortie est utilisée en chargeur. La première tension peut être de 48 V. La troisième tension peut être de 12 V ou encore de 24 V.

La deuxième tension peut permettre d'alimenter le réseau de bord du véhicule automobile, par exemple pour permettre l'utilisation d'un autoradio ou d'autres équipements à bord du véhicule.

La troisième tension peut permettre d'alimenter une batterie, par exemple une batterie de vélo électrique que l'on souhaite charger dans le véhicule, par exemple pendant le roulage ou à l'arrêt.

La troisième tension de sortie peut être inférieure à 60 V, mieux inférieure ou égale à 48 V. Dans un mode de réalisation, la troisième tension de sortie est de 48 V ou de 24 V ou encore de 12V.

Dans un mode particulier de réalisation, la troisième tension est une tension continue, peut être inférieure à 60V, mieux inférieure ou égale à 48V. Dans un mode de réalisation, la troisième tension de sortie continue est de 48V ou de 24V ou encore de 12V.

La deuxième tension de sortie peut être inférieure à 60 V, mieux inférieure ou égale à 48 V. Dans un mode de réalisation, la deuxième tension de sortie est de 12 V ou 24 V.

Dans un mode particulier de réalisation, la deuxième tension est une tension continue, peut être inférieure à 60V, mieux inférieure ou égale à 48V. Dans un mode de réalisation, la deuxième tension de sortie continue est de 12 V ou de 24V.

L'invention a encore pour objet, indépendamment ou en combinaison avec ce qui précède, un véhicule automobile équipé d'un convertisseur tel que décrit ci-dessus. Le véhicule automobile peut être tout électrique ou hybride.

L'invention a encore pour objet un procédé de précharge d'une ou plusieurs capacités, au moyen d'un convertisseur selon l'invention.

Selon un tel procédé, on maintien ouvert au moins un transistor d'isolement K4 d'une cellule afin de découpler ladite cellule et d'utiliser le bras K5, K6 de ladite cellule comme simple conducteur de courant pour fournir un courant de précharge à une ou plusieurs capacités, voire toutes les capacités, du convertisseur et/ou d'un réseau fournissant la première tension.

En outre, on peut commander en hacheur-abaisseur le bras de transistors K1, K2 de la cellule de précharge, afin de fournir une charge suffisante à une ou plusieurs capacités, voire toutes les capacités, du convertisseur et/ou d'un réseau fournissant la première tension, afin d'assurer leur précharge.

Enfin, le transistor de sécurité de précharge K3 permet également d'assurer une protection de la cellule de précharge mentionnée ci-dessus. Il s'ouvre en cas de défaillance.

Par ailleurs, on peut utiliser le bras K5, K6 de ladite cellule commandé en hacheur pour fournir une troisième tension de sortie.

Le convertisseur comporte à cet effet, comme décrit ci-dessus, un circuit de contrôle des transistors, et chaque cellule comporte au moins un transistor d'isolement TR.

Le procédé peut comporter tout ou partie des caractéristiques de l'invention exposées ci-dessus.

### Description détaillée

L'invention pourra être mieux comprise à la lecture de la description détaillée qui va suivre, d'exemples de mise en œuvre non limitatifs de celle-ci, et à l'examen du dessin annexé, sur lequel :
- la figure 1 illustre un circuit électrique de convertisseur DC/DC connu, et
- les figures 2 à 4 illustrent des variantes de réalisation de circuits électriques de convertisseurs conformes à l'invention.

### Convertisseur de tension principal DC/DC

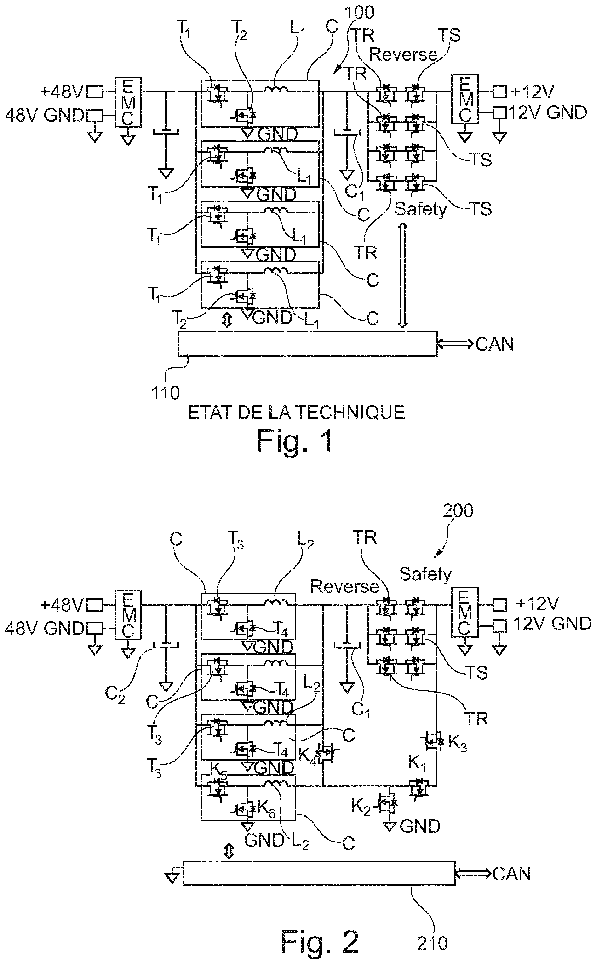

On a illustré à la figure 1 un convertisseur de tension principale 100 DC/DC configuré pour convertir une première tension d'entrée, par exemple de 48 V, en une deuxième tension de sortie, par exemple en 12 V.

Le convertisseur de tension principal 100 comporte un pont fonctionnant en hacheur, de manière connue en soi. Un tel convertisseur est dit hacheur abaisseur (« *buck »* en anglais), et convertit une tension continue en une autre tension continue de plus faible valeur. Dans un exemple de réalisation, il peut s'agir par exemple de convertir une tension de 48 V en une tension de 12 V.

Dans l'exemple de réalisation de la figure 1, le convertisseur DC/DC 100 comporte 4 cellules C disposées en parallèle. Bien entendu, le nombre de cellules C pourrait être différent sans que l'on ne sorte du cadre de la présente invention. Il peut par exemple être compris entre 2 et 12, étant par exemple de 2, 3, 4, 5 ou 6.

L'utilisation de plusieurs cellules peut permettre de réduire les contraintes sur les semi-conducteurs. On parle alors de *hacheurs entrelacés* car les cellules du convertisseur conduisent toutes vers un même condensateur de sortie C2 avec un déphasage de T/4 entre les commandes des transistors de chaque cellule successive où T est la période du cycle de fonctionnement du convertisseur. En d'autres termes, le rapport cyclique au sein de chacune des cellules est identique mais les commandes des transistors sont déphasées de T/4 d'une cellule à l'autre.

Le condensateur de sortie C2 est non polarisé.

Chaque cellule C comporte un premier transistor T1, un deuxième transistor T2, et une inductance L1.

Dans l'exemple décrit ici, les transistors T1 et T2 sont des MOSFETs.

Le fonctionnement d'un tel convertisseur 100 peut être divisé en deux configurations suivant l'état du transistor T1.

Dans l'état passant, le transistor T1 est fermé, le courant traversant l'inductance L1 augmente. La tension aux bornes du deuxième transistor T2 étant négative, aucun courant ne le traverse.

Dans l'état bloqué, le transistor T1 est ouvert. Le deuxième transistor T2 devient passant afin d'assurer la continuité du courant dans l'inductance L1. Le courant traversant l'inductance L1 décroît.

Par ailleurs, le convertisseur 100 comporte des interrupteurs d'isolement TR (en anglais « *reverse* »), reliés directement à la sortie de la ou des cellules C, permettant lorsque fermé de délivrer la tension de sortie, et lorsqu'ouvert de protéger la ou les cellules C.

Le convertisseur 100 comporte également des interrupteurs de sécurité TS (en anglais « *safety* »), lesquels sont montés chacun en série avec un interrupteur d'isolement TR correspondant. Ces interrupteurs de sécurité TS permettent lorsque fermé de délivrer la tension de sortie, et lorsqu'ouvert de protéger la ou les cellules C.

Une telle configuration permet d'éviter le passage du courant dans les deux sens. Les interrupteurs d'isolement et de sécurité sont activés (comme interrupteur ouvert) si une sous-tension ou une surtension, c'est-à-dire des perturbations, apparaissent sur un des réseaux en entrée ou en sortie, ainsi que dans le cas d'un dysfonctionnement matériel du convertisseur DC/DC, par exemple la défaillance d'un transistor.

Chaque paire d'interrupteurs d'isolement et de sécurité est montée en parallèle avec les autres.

Dans l'exemple décrit, le convertisseur comporte 4 paires d'interrupteurs d'isolement et de sécurité, ce qui permet d'améliorer la puissance de l'ensemble, mais on ne sort pas du cadre de la présente invention si leur nombre est différent, étant par exemple de 1, 2, 3, 5 ou 6. En principe, le nombre de paires d'interrupteurs d'isolement et de sécurité est égal au nombre de cellule du convertisseur.

Dans l'exemple décrit, les interrupteurs d'isolement et de sécurité sont des transistors, par exemple des transistors de type MOSFET.

Tous les transistors du convertisseur 100 sont contrôlés par un contrôleur 110 du convertisseur 100.

### Convertisseur avec fonction de précharge

On va maintenant décrire un convertisseur embarqué sur un véhicule conforme à l'invention, pour convertir une première tension en une deuxième tension différente de la première et pour mettre en œuvre une fonction de précharge.

On a illustré à la figure 2 un convertisseur 200 embarqué sur un véhicule, comportant une pluralité de cellules C, comportant chacune un bras de transistors T3, T4 commandés en hacheur pour générer la deuxième tension, et un circuit de contrôle 210 des transistors.

Dans l'exemple décrit le point milieu du bras de transistors T3, T4 de chaque cellule est rélié à la sortie de la cellule par l'intermédiaire d'une inductance L2.

Dans l'exemple décrit, le convertisseur comporte quatre cellules C disposées en parallèle et l'une des cellules peut être découplé par un transistor d'isolement K4.

Par ailleurs, le convertisseur 200 comporte des interrupteurs d'isolement TR (en anglais « *reverse* »), reliés à la sortie de la ou des cellules C, permettant lorsque fermé de délivrer la tension de sortie, et lorsqu'ouvert de protéger la ou les cellules C. Dans l'exemple décrit ici, le convertisseur 200 comporte trois transistors d'isolement TR, reliés directement à la sortie de la ou des cellules C.

En outre, le transistor d'isolement K4 est relié d'un côté à la sortie de la cellule le contenant et de l'autre côté au point milieu du bras de transistors K5, K6 par l'intermédiaire d'une inductance L2.

Le convertisseur 200 comporte également des interrupteurs de sécurité TS (en anglais « *safety* »), lesquels sont montés chacun entre les transistors d'isolement TR et la sortie de la deuxième tension. Ils sont en outre montés en série avec un interrupteur d'isolement TR correspondant. Ces interrupteurs de sécurité TS permettent lorsque fermés de délivrer la tension de sortie, et lorsqu'ouverts de protéger la ou les cellules C.

Dans l'exemple décrit ici, on a trois transistors de sécurité TS disposés en parallèle, chacun relié à la sortie des cellules C.

En outre, le convertisseur 200 comporte un transistor de sécurité de précharge K3 et un bras de transistors K1, K2 commandé en hacheur-abaisseur.

Le transistor de sécurité de précharge K3 est relié au transistor K1 et à la sortie de la deuxième tension.

Le point milieu du bras de transistor K1, K2 est relié au transistor de d'isolement K4 et à l'inductance L2 de la cellule découplée par le transistor de d'isolement K4.

Le bras de transistors K1, K2 commandé en hacheur-abaisseur permet de fournir la tension de précharge aux capacités du convertisseur 200 et aux capacités du réseau fournissant la première tension qui est dans l'exemple décrit une batterie de 48V.

Un circuit de contrôle 210 est configuré pour maintenir ouvert ou fermé le transistor d'isolement K4.

Lorsque le transistor d'isolement K4 est fermé, toutes les cellules du convertisseur pilotées par le circuit de contrôle 210 permettent alors de fournir la deuxième tension. Les transistors T3, T4 et K5, K6 des cellules sont commandés par le circuit de contrôle 210 de la même façon que dans un convertisseur de tension selon l'art antérieur, et contrôlée avec le même cycle de fonctionnement. L'un des transistors d'un bras d'une cellule est ouvert, pendant que l'autre est passant, puis inversement. On a un déphasage de T/4 entre les commandes d'ouverture ou de fermeture des transistors des différentes cellules, où T la période du cycle de fonctionnement. En d'autres termes, le rapport cyclique au sein de chacune des cellules est identique mais les commandes des transistors sont déphasées de T/4 d'une cellule à l'autre.

Lorsque le transistor d'isolement K4 est ouvert, on a un découplage de ladite cellule et on utilise le bras K5, K6 de ladite cellule comme simple conducteur de courant (en d'autres termes, le transistor K5 est fermé et le transistor K6 est ouvert) pour fournir un courant de précharge à une ou plusieurs capacités, voire toutes les capacités, du réseau fournissant la première tension et du convertisseur, notamment la capacité C2 Dans l'exemple décrit, le circuit de contrôle 210 désactive les transistors T3 et T4 des autres cellules de la pluralité de cellules, la deuxième tension n'est alors plus disponible.

Le convertisseur 200 comporte une capacité C1 branchée à la sortie des cellules C du convertisseur. Dans le cas où le transistor d'isolement K4 est ouvert, la capacité C1 est branchée à la sortie des cellules du convertisseur autre que la cellule du transistor d'isolement K4. Dans le cas où ce transistor d'isolement K4 est fermé, alors ladite cellule sert au convertisseur pour fournir la deuxième tension, et la capacité C1 est branchée à la sortie de toutes les cellules du convertisseur.

Dans le mode de réalisation qui vient d'être décrit, la capacité C1 est polarisée.

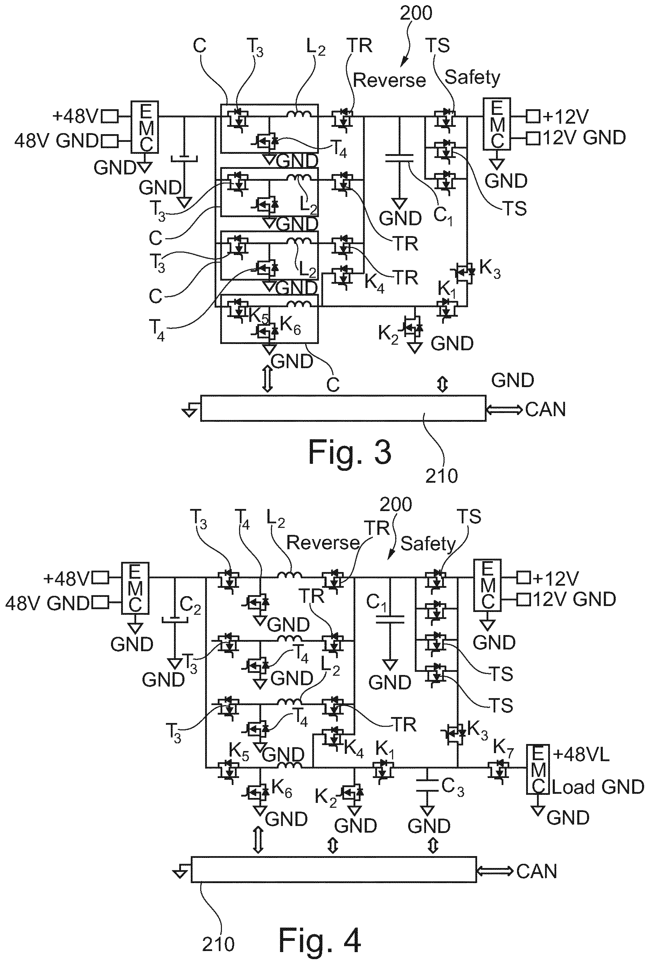

On ne sort pas du cadre de la présente invention si la capacité C1 branchée à la sortie des cellules du convertisseur est non polarisée, comme illustré à la figure 3.

Ce mode de réalisation diffère également du précédent par la position des transistors d'isolement TR. Ceux-ci-sont disposés entre la capacité C1 et les sorties des cellules C en série avec l'inductance L2 de ces cellules.

La capacité C1 branchée à la sortie des cellules C du convertisseur est alors branchée entre les transistors d'isolement TR et les transistors de sécurité TS.

Dans une variante de réalisation illustrée à la figure 4, le convertisseur assure additionnellement une fonction de charge pour fournir une troisième tension de sortie.

Dans ce mode de réalisation, le circuit de contrôle 210 est configuré pour sélectivement maintenir ouvert au moins le transistor d'isolement K4 afin de découpler la cellule correspondante et d'utiliser le bras de ladite cellule commandé en hacheur pour fournir une troisième tension de sortie, qui est dans l'exemple décrit de 48 V.

En d'autres termes, lorsque le transistor d'isolement K4 est fermé, la cellule correspondante est utilisée comme cellule de convertisseur selon l'art antérieur, toutes les cellules du convertisseur permettant alors de fournir seulement la deuxième tension.

Dans la suite de la description, le transistor d'isolement K4 est ouvert par le circuit de contrôle 210.

Le convertisseur comporte en outre un transistor d'isolement supplémentaire K7 disposé directement en amont de la sortie de la troisième tension.

Le convertisseur comporte également une capacité C3. Cette capacité C3 est branchée à une de ses extémités entre le transistor de sécurité de précharge (K3) mentionné ci-dessus et le transistor d'isolement supplémentaire K7 et est réliée par l'autre de ses extrémités à la masse.Le circuit de contrôle 210 est configuré pour permettre, lorsque le transistor d'isolement K4 et le transistor d'isolement supplémentaire K7 sont simultanément ouverts alors que le transistor de sécurité de précharge K3 est fermé, d'utiliser le bras de la cellule déconnectée comme simple conducteur de courant (i.e le transistor K5 est fermé et le transistor K6 est ouvert) et le bras de transistor K1, K2 comme un hacheur-abaisseur pour fournir un courant de précharge à une ou plusieurs capacités, voire toutes les capacités, du réseau délivrant la première tension et du convertisseur.

De même, le circuit de contrôle 210 est configuré pour permettre, lorsque le transistor de d'isolement K4 et le transistor de sécurité de précharge K3 sont simultanément ouverts alors que le transistor d'isolement supplémentaire K7 est fermé d'utiliser le bras de la cellule déconnectée comme circuit convertisseur de tension pour réaliser un circuit de charge délivrant la troisième tension.

Bien entendu, l'invention n'est pas limitée aux exemples qui viennent d'être décrits. En particulier, le nombre de cellules peut être différent.

## Revendications

1. Convertisseur (200) de tension embarqué sur un véhicule automobile, pour convertir une première tension en une deuxième tension différente de la première, comportant :
- une pluralité de cellules (C) disposées en parallèle, comportant chacune un bras de transistors (T3, T4) commandé en hacheur pour générer la deuxième tension ,
- au moins un transistor d'isolement (K4), et
- un circuit de contrôle (210) des transistors,
le circuit de contrôle (210) étant configuré pour sélectivement maintenir ouvert ledit au moins un transistor d'isolement (K4) afin de découpler une cellule de la pluralité de cellules et d'utiliser le bras (K5, K6) de ladite cellule comme simple conducteur de courant pour fournir un courant de précharge à une ou plusieurs capacités (C2), voire toutes les capacités, du convertisseur et/ou d'un réseau fournissant la première tension et, **caractérisé en ce que** ledit circuit de contrôle (210) est en outre configuré pour sélectivement maintenir ouvert ledit au moins un transistor d'isolement (K4) afin de découpler la cellule correspondante et d'utiliser le bras (K5, K6) de ladite cellule commandée en hacheur pour fournir une troisième tension de sortie

2. Convertisseur selon la revendication précédente, comportant en outre une cellule de précharge comportant un bras de transistors (K1, K2) commandé en hacheur-abaisseur.

3. Convertisseur selon l'une quelconque des revendications précédentes, comportant en outre un transistor de sécurité de précharge (K3) entre ledit bras de transistors (K1, K2) commandé en hacheur-abaisseur et la sortie de la deuxième tension.

4. Convertisseur selon l'une quelconque des revendications précédentes, comportant une capacité (C1) branchée à la sortie des cellules du convertisseur.

5. Convertisseur selon la revendication précédente, ladite capacité (C1) branchée à la sortie des cellules du convertisseur étant polarisée.

6. Convertisseur selon l'une quelconque des revendications précédentes, comportant au moins un transistor d'isolement (TR) associé à une ou des cellule de la pluralité de cellules.

7. Convertisseur selon la revendication précédente, comportant en outre un transistor de sécurité (TS) entre ledit au moins un transistor d'isolement (TR) et la sortie de la deuxième tension.

8. Convertisseur selon l'une quelconque des revendications précédentes, comportant en outre un transistor d'isolement supplémentaire (K7) disposé directement en amont de la sortie de la troisième tension.

9. Convertisseur selon la revendication précédente, comportant en outre une capacité (C3) reliée par une de ses bornes au transistor d'isolement supplémentaire (K7).

10. Convertisseur selon l'une quelconque des revendications précédentes, comportant un transistor de sécurité de précharge (K3), le circuit de contrôle (210) étant configuré pour permettre, lorsque le transistor de sécurité de précharge (K3) est ouvert, de fournir au moins la troisième tensions, et lorsque le transistor de sécurité de précharge (K3) est fermé, d'utiliser le bras de ladite cellule commandé en hacheur comme simple conducteur de courant pour fournir un courant de précharge à une ou plusieurs capacités, voire toutes les capacités, du convertisseur et/ou d'un réseau fournissant la première tension.

11. Procédé au moyen d'un convertisseur selon l'une quelconque des revendications précédentes, dans lequel on maintient ouvert au moins un transistor d'isolement (K4) d'une cellule afin de découpler ladite cellule et d'utiliser le bras (K5, K6) de ladite cellule comme simple conducteur de courant pour fournir un courant de précharge à une ou plusieurs capacités, voire toutes les capacités, du convertisseur et/ou d'un réseau fournissant la première tension, **caractérisé en ce qu'**on maintient sélectivement ouvert ledit au moins un transistor d'isolement (K4) afin de découpler la cellule correspondante et d'utiliser le bras (K5, K6) de ladite cellule commandée en hacheur pour fournir une troisième tension de sortie.

12. Véhicule automobile équipé d'un convertisseur (200) selon l'une quelconque des revendications 1 à 10.

## Patentansprüche

1. Spannungswandler (200) an Bord eines Kraftfahrzeugs, um eine erste Spannung in eine zweite Spannung anders als die erste umzuwandeln, der aufweist:
- eine Vielzahl von parallel angeordneten Zellen (C), die je einen Arm von Transistoren (T3, T4) aufweisen, der als Zerhacker gesteuert wird, um die zweite Spannung zu erzeugen,
- mindestens einen Trenntransistor (K4), und
- eine Steuerschaltung (210) der Transistoren,
wobei die Steuerschaltung (210) konfiguriert ist, den mindestens einen Trenntransistor (K4) selektiv offen zu halten, um eine Zelle von der Vielzahl von Zellen abzukoppeln und den Arm (K5, K6) der Zelle als einfachen Stromleiter zu verwenden, um einen Vorladestrom an einen oder mehrere Kondensatoren (C2), sogar alle Kondensatoren, des Wandlers und/oder eines die erste Spannung liefernden Netzes zu liefern, und
**dadurch gekennzeichnet, dass** die Steuerschaltung (210) außerdem konfiguriert ist, den mindestens einen Trenntransistor (K4) selektiv offen zu halten, um die entsprechende Zelle abzukoppeln und den Arm (K5, K6) der als Zerhacker gesteuerten Zelle zu verwenden, um eine dritte Ausgangsspannung zu liefern.

2. Wandler nach dem vorhergehenden Anspruch, der außerdem eine Vorladezelle aufweist, die einen als Abwärts-Zerhacker gesteuerten Arm von Transistoren (K1, K2) aufweist.

3. Wandler nach einem der vorhergehenden Ansprüche, der außerdem einen Vorlade-Sicherheitstransistor (K3) zwischen dem als Abwärts-Zerhacker gesteuerten Arm von Transistoren (K1, K2) und dem Ausgang der zweiten Spannung aufweist.

4. Wandler nach einem der vorhergehenden Ansprüche, der einen Kondensator (C1) aufweist, der an den Ausgang der Zellen des Wandlers angeschlossen ist.

5. Wandler nach dem vorhergehenden Anspruch, wobei der an den Ausgang der Zellen des Wandlers angeschlossene Kondensator (C1) vorgespannt ist.

6. Wandler nach einem der vorhergehenden Ansprüche, der mindestens einen Trenntransistor (TR) aufweist, der einer oder mehreren der Zellen der Vielzahl von Zellen zugeordnet ist.

7. Wandler nach dem vorhergehenden Anspruch, der außerdem einen Sicherheitstransistor (TS) zwischen dem mindestens einen Trenntransistor (TR) und dem Ausgang der zweiten Spannung aufweist.

8. Wandler nach einem der vorhergehenden Ansprüche, der außerdem einen zusätzlichen Trenntransistor (K7) aufweist, der direkt stromaufwärts vor dem Ausgang der dritten Spannung angeordnet ist.

9. Wandler nach dem vorhergehenden Anspruch, der außerdem einen Kondensator (C3) aufweist, der über eine seiner Klemmen mit dem zusätzlichen Trenntransistor (K7) verbunden ist.

10. Wandler nach einem der vorhergehenden Ansprüche, der einen Vorlade-Sicherheitstransistor (K3) aufweist, wobei die Steuerschaltung (210) konfiguriert ist, um, wenn der Vorlade-Sicherheitstransistor (K3) offen ist, zu erlauben, mindestens die dritte Spannung zu liefern, und wenn der Vorlade-Sicherheitstransistor (K3) geschlossen ist, den als Zerhacker gesteuerten Arm der Zelle als einfachen Stromleiter zu verwenden, um einen Vorladestrom an einen oder mehrere Kondensatoren, sogar alle Kondensatoren, des Wandlers und/oder eines die erste Spannung liefernden Netzes zu liefern.

11. Verfahren mittels eines Wandlers nach einem der vorhergehenden Ansprüche, wobei mindestens ein Trenntransistor (K4) einer Zelle offen gehalten wird, um die Zelle abzukoppeln und den Arm (K5, K6) der Zelle als einfachen Stromleiter zu verwenden, um einen Vorladestrom an einen oder mehrere Kondensatoren, sogar alle Kondensatoren, des Wandlers und/oder eines die erste Spannung liefernden Netzes zu liefern,
**dadurch gekennzeichnet, dass** der mindestens eine Trenntransistor (K4) selektiv offen gehalten wird, um die entsprechende Zelle abzukoppeln und den Arm (K5, K6) der als Zerhacker gesteuerten Zelle zu verwenden, um eine dritte Ausgangsspannung zu liefern.

12. Kraftfahrzeug, das mit einem Wandler (200) nach einem der Ansprüche 1 bis 10 ausgestattet ist.

## Claims

1. Voltage converter (200) on board a motor vehicle, for converting a first voltage into a second voltage different from the first, comprising:
- a plurality of cells (C) arranged in parallel, each comprising a transistor arm (T3, T4) controlled as a chopper for generating the second voltage,
- at least one isolation transistor (K4), and
- a control circuit (210) for controlling the transistors,
the control circuit (210) being configured so as to selectively hold open said at least one isolation transistor (K4) in order to decouple a cell from the plurality of cells and to use the arm (K5, K6) of said cell as a simple current conductor for supplying a pre-charge current to one or more capacitors (C2), or all of the capacitors, of the converter and/or of a network supplying the first voltage, and,
**characterized in that** said control circuit (210) is further configured so as to selectively hold open said at least one isolation transistor (K4) in order to decouple the corresponding cell and to use the arm (K5, K6) of said cell controlled as a chopper to supply a third output voltage.

2. Converter according to the preceding claim, further comprising a pre-charge cell comprising a transistor arm (K1, K2) controlled as a step-down chopper.

3. Converter according to either of the preceding claims, further comprising a pre-charge safety transistor (K3) between said transistor arm (K1, K2) controlled as a step-down chopper and the output of the second voltage.

4. Converter according to any one of the preceding claims, comprising a capacitor (C1) connected to the output of the cells of the converter.

5. Converter according to the preceding claim, said capacitor (C1) connected to the output of the cells of the converter being polarized.

6. Converter according to any one of the preceding claims, comprising at least one isolation transistor (TR) associated with one or more cells of the plurality of cells.

7. Converter according to the preceding claim, further comprising a safety transistor (TS) between said at least one isolation transistor (TR) and the output of the second voltage.

8. Converter according to any one of the preceding claims, further comprising an additional isolation transistor (K7) arranged directly upstream of the output of the third voltage.

9. Converter according to the preceding claim, further comprising a capacitor (C3) connected via one of its terminals to the additional isolation transistor (K7) .

10. Converter according to any one of the preceding claims, comprising a pre-charge safety transistor (K3), the control circuit (210) being configured so as to allow, when the pre-charge safety transistor (K3) is open, at least the third voltage to be supplied and, when the pre-charge safety transistor (K3) is closed, the arm of said cell controlled as a chopper to be used as a simple current conductor for supplying a pre-charge current to one or more capacitors, or all of the capacitors, of the converter and/or of a network supplying the first voltage.

11. Method using a converter according to any one of the preceding claims, wherein at least one isolation transistor (K4) of a cell is held open in order to decouple said cell and to use the arm (K5, K6) of said cell as a simple current conductor for supplying a pre-charge current to one or more capacitors, or all of the capacitors, of the converter and/or of a network supplying the first voltage,
**characterized in that** said at least one isolation transistor (K4) is selectively held open in order to decouple the corresponding cell and to use the arm (K5, K6) of said cell controlled as a chopper to supply a third output voltage.

12. Motor vehicle equipped with a converter (200) according to any one of Claims 1 to 10.
